# EUROPEAN PATENT APPLICATION

(11) **EP 3 875 334 A1**
(43) Date of publication of application: **08.09.2021**
(21) Application number: 18939021.4
(22) Date of filing: 02.11.2018
(51) Int. Cl.: B61B 13/00, B61B 1/00

(54) **SYSTEM FOR TRANSFERRING PASSENGERS BETWEEN TWO CONSECUTIVE METRO TRAINS WHILE MOVING BETWEEN STATIONS**

(71) Applicant: Khadro, Karim, 4900 Spa (BE)
(72) Inventor: KHADRO, Ghassan, Guangdong 528400 (CN)
(74) Representative: Gevers Patents
(86) International application number: PCT/IB2018/058627
(87) International publication number: WO 2020/089679

(57) **Abstract**

The purpose of the invention is to divide smart driverless metro trains on each line and in each direction into two types that run consecutively. The first type stops at odd stations and the second type stops at even stations. Every two metro trains connect together while moving between two stations, and passengers are exchanged according to their destination. The metro trains separate so that the rear train stops in the next station and the front train continues without stopping, making a new connection to the metro train that has just left from the station ahead. Consequently, stopping time is saved, which shortens the journey time for the passengers and the metro train and enables the passengers to arrive at their destination before the metro train arrives there. In addition, 50% of the energy required for braking and setting off is saved.

## Description

### Former situation:

The subway network consists of several lines of movement in two directions. Each direction hosts several successive subway trains consisting of several carts that halt at all stations along the line. The time needed for any given stop approximates 60 seconds, divided amongst speed-breaking duration, the duration till full-stop, plus acceleration time.

### Problem and shortcoming of former situation:

The halting of the subway train at all stations results in prolongation of the time needed for the completion of one full round.

Consequently, many of the passengers who need to transit through numerous stations have to experience massive waste of their time in order to reach their final destinations.

In addition to that, huge amounts of energy are being wasted during the process of stopping and re-launching the subway train at each station.

### The Innovation:

The total number of stops will be reduced by half and a method provided for passengers to transit between successive subway trains in movement.

Consequently:
1. The total time span of each subway train trip will be reduced, thus efficiency of operation increased.
2. The total time that a trip takes the passenger will be reduced even more than the reduction in the subway train trip time, and the passenger shall be faster than the train itself when it comes to reaching his final destination.
3. The energy needed for the process of stopping and re-launching the subway train will be reduced by half.

### Detailed Description:

The new subway-system consists of fewer number of carts. For example, if a subway train of the old subway-system consists of six carts, the new one will consist of only one, two or three. Let's assign names to the new subway on a given line: A1, A2, A3, A4 ...

Odd numbered trains will stop at odd numbered stations only, while even numbered trains will stop exclusively at even numbered stations.

Overall control of all the subway trains will be fully computerized. Sensors for safe operation will be implemented.

After the subway train halts at a given station and all the passengers whose trip has ended there have debarked and new passengers have embarked, each according to his destination (a passenger intending a ride of one station will embark at the back, while a passenger wishing to ride the length of two stations will embark at the middle of the train, and the passenger riding for three or more stations will embark at the front). After the doors have closed and the train has sped-up and reached its assigned regular speed, at that moment the next subway train which has not halted at the previous station because it is not an assigned station for that train, starts merging with the first train at its back-end. The two trains will be fused together, and their connecting doors opened in order for the passenger exchange to take place as follows: (passengers in the back who wish to ride for one station have to move into the back train that has fused from the back-end because that train will stop at the next station. Passengers inside the back train who wish to ride an odd number of stations have to make one transit, and passengers who are in a hurry will have to make several consecutive transits). When the fusion duration of 40 or more seconds, according to distance between stations, is over, the doors will close, and the two subway trains defuse and unmerge again. The back-train then breaks for its stop at the next station, while the front-train will drive through without halting in order to perform a new merging operation with another subway train that has completed its launch out of said station and reached its assigned speed, merging with that train at its back-end to perform a new exchange operation, and so on.

The total number of subway-trains in this system will be more than that of the old system, therefore the total number of carts per train has to be reduced, because approximately every minute two trains will pass, one will drive through and the other will stop for passengers to embark and debark, while the train that has driven through without stopping will perform a merging operation at the back-end of the train that has just launched, in order to open the connecting doors and receive the passengers who wish to debark at the following station, while letting out those passengers who will ride on, thus saving the stopping time, and so forth.

Elderly-, pregnant- and special-needs passengers will ride in the middle of the subway-train and will not have to perform any transits if they ride for an even number of stations. In case they wish to ride for only one station they will have to ride in the back-end of the train and transit into the following train, which will halt at the following station. In case they need to ride for an odd number of stations they will have to ride in the front-end of the train and perform one exchange and then they can rest in the middle of the train until they reach their destination. In this case scenario they could achieve a time-saving average of over 20%.

Passengers who are in a hurry and wish to travel numerous stations have to ride in the front-end and perform all transits until they reach their destination. They may achieve a time-saving average of over 40%.

### What will the passengers benefit from this new subway:

The benefit lies in a reduction of total travel time that could reach as high as 50% in some cases.

### What will be the benefit for the subway operation company:

Due to the subway train only halting at either odd- or even station numbers, each route will be completed in approximately 20% less of the time, which results in higher operation quality.

The salvage is achieved in between the old subway halting at all stations, whilst the new one will only halt at either odd- or even station numbers, thus achieving a 50% cut in the amount of energy consumed by breaking- and re-launch operations. In the example of the subway of a city like Guangzhou, China, there exist nearly 200 stations averaging 300 halts per subway train, each train consisting of 6 carts or more. This throughout the year, i.e. 365 days. The number of halts per cart and year totals way over 100 million, plus 100 million re-launch per cart and year. If we can achieve a reduction by half to those numbers, the amount of energy- and time saving averages shall be immense.

### Method of operation:

### What will be the situation during peak- and off-peak times:

Operating companies of old-system subways resort to shortening the periods in-between trains at peak times and, alternatively, lengthening the periods in-between trains at off-peak times (for example before midnight). In these cases, the passenger is forced to spend lengthy waiting periods at a station, maybe 10 minutes or more, until the subway train arrives.

With the new-system subway there will be no waiting periods for the passenger, because a train arrives approximately every minute.

### So how does controlling the subway during peak and off-peak times take place?

Under standard conditions, the subway train will consist of one, two or more carts. As it gets closer to peak time, the subway trains start their new round out of their home station with an added cart to suffice the need. With the off-peak time coming in, the subway trains start the new round out of their home station with one cart less, and so on, until the lowest traffic-movement point is reached. Then the subway trains start their new round with one cart only, and so forth. Thus a passenger using the subway during off-peak times will be able to save time due to minimal waiting periods at the subway stations. The time gain could reach over 50%.

### What to do if some of the consecutive stations are so close to each other that the merging time is lesser than the time needed for opening doors and passengers to transfer, i.e., to complete the exchange operation?

In this case, there should be a reduction in train-speed between those two stations in accordance with the time needed for merging and exchange.

### How to calculate the approximate rate of saving?

If we take as an example the blue line number 2 in the city of Guangzhou, China, which has 24 stations, and the time needed in the old subway-system is 47 minutes.

With the new subway-system, trains will stop only at half the stations, i.e. , merely at 12 of the stations. If we estimate the time wasted at a minimum of 55 seconds per stop, divided between halting time and time wasted in the slowing-down and speeding-up processed, thus saving 11 minutes, the new subway-system will need only 36 minutes, thus achieving a time save in favor of the subway of 23.4%.

As for the passenger who wishes to ride the entire length of the line and perform all of the exchanges, there will be no loss of time in halting times at stations except the start- and end-stations, thus saving 22 stop-times, which amounts to 20.17 minutes. Consequently, this passenger will need less than 27 minutes to cover the complete route, gaining a time save of 42.9%, plus saving the waiting-time at the stations.

### Will it necessitate adjustments in subway infrastructures or to carts?

We shall not need to implement any major adjustments in subway infrastructures, merely minor adjustments.

However, we shall need new, intelligent, computer operated self-driving subway train carts, in addition to sensors and crash blockers, in order for the linking operation to perform smoothly. The carts should also have operable front- and back doors supporting sensors and alarm devices.

### Explanation of drawings and charts

Presented are three drawings to elucidate the operations linking and unlinking of the subway trains

### Explanation for first drawing:

while train Nr.7 is in Stop position at station Nr.3, trains Nr.8 and Nr.9 are fused together between stations Nr.2 and Nr.3 and exchanging passengers, so that the back-train Nr.9 receives those passengers from the front-train Nr.8 who wish to debark at station Nr.3, which is one of that train's stations. Simultaneously, the front-train Nr.8 receives those passengers who wish to save stopping-time at station Nr.3 because it is not one of that train's stations. Then it becomes time for train Nr.7 to launch out of station Nr.3 and for trains Nr.8 and Nr.9 to detach each other as soon as the shared doors have been closed. At the same time, train Nr.9 starts to slow-down speed in preparation for its stop at station Nr.3, whilst train Nr.8 continues its motion and passes through station Nr.3 at regular speed, reaching train Nr.7 to merge with it as soon as the latter, too, has reached regular speed. The operations of fusion, opening doors and passenger transfer in-motion between stations Nr.3 and Nr.4, are now carried out, while train Nr.9 reaches its stop at station Nr.3, awaiting the advent of trains Nr.10 and Nr.11, for the described process to be repeated.

### Explanation of second drawing:

As trains Nr.7 and Nr.8 approach the next station, Nr.4, train Nr.6 would still be at the station and about to commence its movement out of it. At that point the two trains detach, and train Nr.8 starts slowing down speed in preparation for a stop at station Nr.4, while train Nr.7 continues at regular speed and passes-through station Nr.4 in order to catch-up with the train that has just left said station, which would be train Nr.6, and merge with it as soon as it has reached regular speed.

### Explanation of third drawing:

After train Nr.7 has merged with train Nr.6 while in motion towards the next station, Nr.5, where train Nr.5 is stopped, there will be yet another repetition of what we described above regarding station approach. Train Nr.5 will commence movement and the two trains will un-merge each other, in order for the back-train, Nr.7, to slow down and stop at station Nr.5, while train Nr. 6 passes through said station at regular speed in order to merge with train Nr.5.

### Explanation of symbols

- **A**: Name of the subway train
- **S**: Speed of the subway train in meter per second
- **ST**: Station number

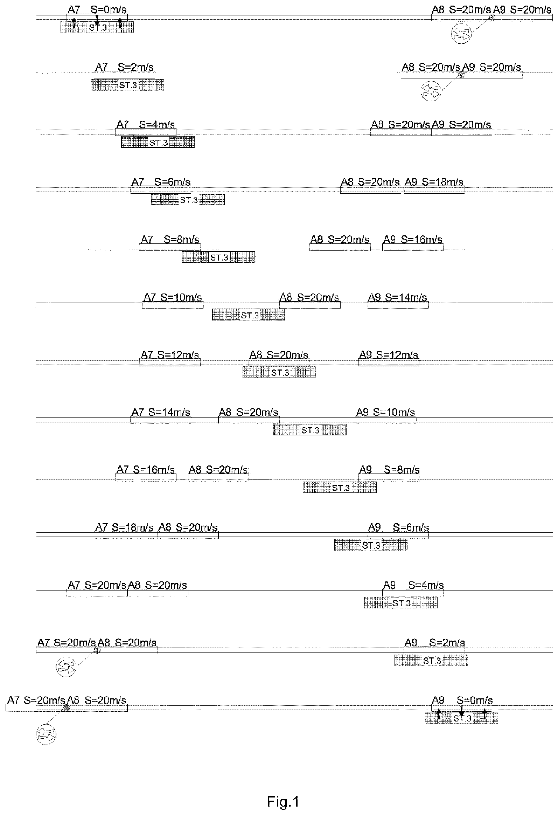

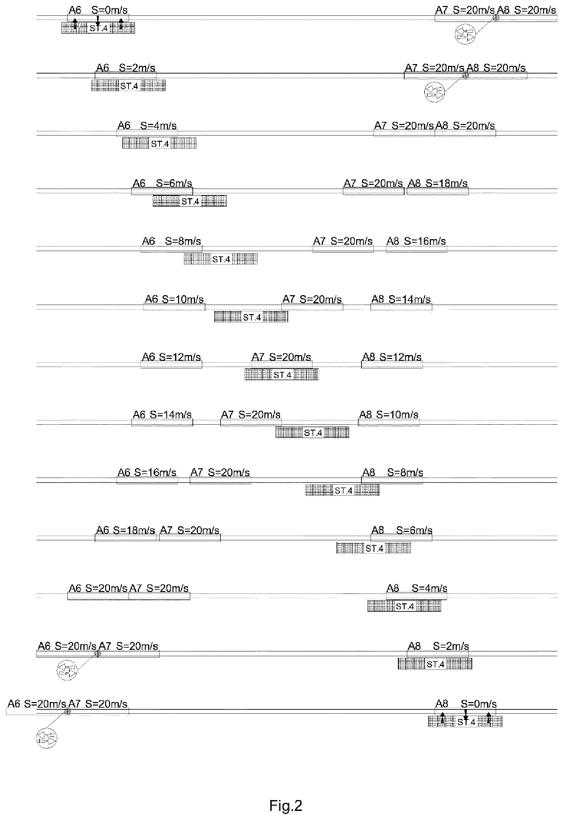

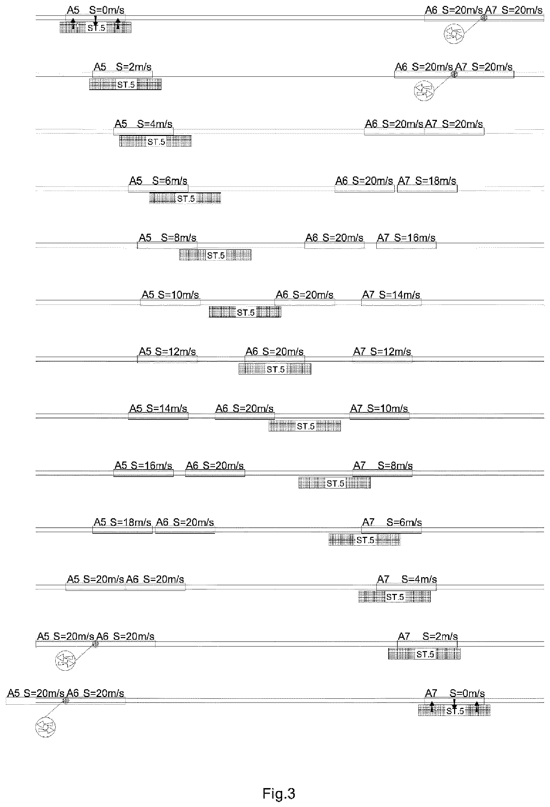

## Claims

1. Consecutive subway trains on any given line and direction are divided into two types that take turns halting or not halting at consecutive stations.

2. Merging and un-merging of every two consecutive trains in motion between stations and opening of the connective doors to allow the operation of passenger exchange, each according to his own target destination (those passengers who intend to debark at the next station will have to move to the back train, and those who do not wish to debark at that point can move to the front train if they wish to take advantage of stopping time)

3. Saving of 50% of breaking- and re-launching energy, due to the train only halting at either odd- or even numbered stations.

4. at the beginning and in the interest of safety, one could perform the merging of consecutive subway trains whilst stopped at the station, or in lower driving speeds, instead of performing the operation at full driving speed. However, in that case we shall not achieve the full desired benefit. For example, the intended energy saving on breaking- and re-launching operations will, in this case, be fully or partially impaired. In addition to that, we shall loose certain amounts of time on speed deceleration and acceleration operations. Still, saving time through the length of stops at stations would be possible in any case scenario.
